(19) **Europäisches Patentamt**

**European Patent Office**

**Office européen des brevets**

(11) **EP 1 089 068 A1**

(12) **EUROPÄISCHE PATENTANMELDUNG**

(43) Veröffentlichungstag:
04.04.2001 Patentblatt 2001/14

(51) Int Cl.$^7$: **G01N 21/64**

(21) Anmeldenummer: **99250344.1**

(22) Anmeldetag: **28.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Graf, Norbert**
**24972 Steinberg (DE)**

(72) Erfinder:
• **Graf, Norbert**
**24972 Steinberg (DE)**
• **Gottfriedt, Kai, Dipl.-Ing. agr**
**24891 Struxdorf (DE)**

• **Bublitz, Jens, Dr.**
**23684 Scharbeutz (DE)**
• **Schade, Dr.**
**38644 Goslar (DE)**
• **Siemers, Christian, Dr.**
**31139 Hildesheim (DE)**
• **Hipp, Bernd**
**24109 Kiel (DE)**

(74) Vertreter: **Patentanwälte Wenzel & Kalkoff**
**Grubesallee 26**
**22143 Hamburg (DE)**

(54) **Verfahren und Vorrichtung zur Bestimmung von Kontaminationen**

(57)   Ein Verfahren zur Bestimmung von Kontaminationen umfaßt die Schritte Bestrahlen einer Probe mit gepulster Laserstrahlung aus wenigstens einer Laserlichtquelle, Detektieren der von der Probe abgestrahlten Fluoreszenzstrahlung in einem ersten Erfassungsabschnitt $T_1$ als Meßwert $F_1$ sowie in einem zweiten Erfassungsabschnitt $T_2$ als Meßwert $F_2$ und Bestimmen des Grades der Kontamination durch Bildung des Verhältnisses der Meßwerte $F_1$ und $F_2$. Indem das Verfahren zusätzlich die Schritte Detektieren von nicht von der Fluoreszenz herrührender Strahlung in einem dritten Erfassungsabschnitt, der um einen Abstand x von dem zweiten Erfassungsabschnitt getrennt ist, als Meßwert $F_3$ und Bestimmen des Grades der Kontamination durch Bildung des Verhältnisses der Meßwerte $F_1$ und $F_2$ unter Berücksichtigung des dritten Meßwertes $F_3$ und/oder das Bestrahlen der Probe mit einer Frequenz größer als 1 kHz umfaßt, ist eine Ausschaltung von Störeinflüssen und eine Verbesserung der Meßergebnisse möglich.

Fig. 2

EP 1 089 068 A1

**Beschreibung**

Die Erfindung betrifft allgemein die Bestimmung von Kontaminationen, insbesondere durch Kohlenwasserstoffe, in flüssigen, festen und gasförmigen Medien.

Die Erfindung betrifft im speziellen ein Verfahren zur Bestimmung von Kontaminationen, umfassend die Schritte Bestrahlen einer Probe mit gepulster Laserstrahlung aus wenigstens einer Laserlichtquelle, Detektieren der von der Probe abgestrahlten Fluoreszenzstrahlung in einem ersten Erfassungsabschnitt $T_1$ als Meßwert $F_1$ sowie in einem zweiten Erfassungsabschnitt $T_2$ als Meßwert $F_2$ und Bestimmen des Grades der Kontamination durch Bildung des Verhältnisses der Meßwerte $F_1$ und $F_2$.

Die Erfindung betrifft ferner eine Vorrichtung zur Bestimmung von Kontaminationen, umfassend wenigstens eine Laserlichtquelle zur Erzeugung von gepulster Laserstrahlung, eine Beleuchtungs- und Beobachtungsoptik zur Aufbringung des Laserlichtes auf eine und zur Aufnahme der abgestrahlten Strahlung von einer Probe sowie eine Detektoreinheit zur Erfassung von von der Probe abgestrahlter und über die Beobachtungsoptik weitergeleiteter Fluoreszenzstrahlung der Probe, wobei die Detektoreinheit die von der Probe abgestrahlte Fluoreszenzstrahlung in zwei Erfassungsabschnitten in Form eines Untergrundsignalabschnitts sowie eines Nutzsignalabschnitts, die einen unterschiedlichen zeitlichen Abstand T von einem Zeitpunkt der Aufbringung eines Laserblitzes auf die Probe aufweisen, erfaßt und eine Rechnereinheit zur quantitativen Bestimmung des Kontaminationsgrades der Probe aus den in jenen beiden Erfassungsabschnitten erfaßten Meßsignalen vorgesehen ist.

Die Bestimmung von Kontaminationen in flüssigen, gasförmigen und festen Medien gewinnt immer stärker an Bedeutung. So müssen beispielsweise in Böden Kontaminationen nachgewiesen werden, und z.B. im Bereich ehemaliger Industrieanlagen oder gewerblich genutzter Flächen muß festgestellt werden, welcher Teil des Bodens in welchem Maß mit Schadstoffen belastet ist, um eine entsprechende Begutachtung, Sanierung und/oder Entsorgung vornehmen zu können.

Vor allem aber ist die Bestimmung von Kontaminationen im Falle fließender Medien von überragender Bedeutung. Eine Überprüfung bzw. Kontrolle von Abwässern z.B. gehört zur Auflage eines jeden Gewerbebetriebes, bei dem in irgendeiner Form Fremdstoffe ins Abwasser gelangen können. Dabei muß überprüft werden, inwieweit das Abwasser mit Schadstoffen belastet ist, um es ggf. reinigen und somit sicherstellen zu können, daß nur Wasser mit einer Schadstoffbelastung unter einem vorgegebenen Grenzwert der endgültigen Entsorgung zugeführt wird.

Ein weiteres wichtiges Anwendungsgebiet ist eine Kontrolle von Apparaturen und Maschinen. Indem die durchströmenden flüssigen oder gasförmigen Medien überwacht werden, läßt sich durch Schwankungen oder plötzliche Zunahme der Konzentration definierter Stoffgruppen sofort feststellen, daß z.B. durch ein Leck unerwünschte Substanzen austreten; entsprechende Gegenmaßnahmen können unverzüglich eingeleitet werden.

Eine wichtige Gruppe der zu bestimmenden Kontaminationen sind Kohlenwasserstoffe, insbesondere aromatische Kohlenwasserstoffe. Zur Bestimmung des Gehaltes solcher Kontaminationen ist es bekannt, mit zeitabhängiger Fluoreszenzspektroskopie zu arbeiten. So ist in der DE-OS 25 37 098 eine "Vorrichtung zur Unterscheidung zwischen zwei fluoreszierenden Teilchenarten mit unterschiedlichen Fluoreszenzabklingdauern" beschrieben, wobei bekannt ist, daß die Fluoreszenzemissionen in einer bestimmten Abklingzeit abnehmen.

Ferner offenbart die US 5,084,617 eine Vorrichtung, in der mittels laserinduzierter Fluoreszenz das Vorhandensein von Kohlenwasserstoffen z.B. in einem Bohrloch nachgewiesen wird. Nachteilig an dieser Vorrichtung ist, daß ein gesamtes Fluoreszenzspektrum in einem Photomultiplier aufgenommen und zeitaufgelöst in einer Vielzahl von Fenstern aufbereitet werden muß, um durch Vergleich des Aussehens des Spektrums mit bekannten Spektren die Aussage treffen zu können, ob Kohlenwasserstoffe vorhanden sind oder nicht. Dabei muß eine hohe Anzahl Meßwerte aufgenommen werden, um eine ausreichende Meßsicherheit zu erreichen. Außerdem läßt sich mit diesem Verfahren keine quantitative Bestimmung der gefundenen Kohlenwasserstoffe durchführen; Mischungen können nicht bestimmt, störende Einflüsse nicht ausgeschaltet werden.

Die DE-PS 195 08 119 offenbart eine Vorrichtung und ein Verfahren zur Bestimmung von Kontaminationen unter Verwendung von differentieller, zeitintegrierter Fluoreszenzmessung. Dabei wird die Fluoreszenzstrahlung in zwei Zeitfenstern, die einen unterschiedlichen Abstand vom Zeitpunkt des Aufbringens des Laserblitzes auf die Probe haben, detektiert. Aus den Verhältnissen der in den beiden Zeitfenstern eintreffenden Photonen kann eine charakteristische Kurve über der sich ändernden Konzentration aufgetragen werden. Diese Kurve erlaubt Aussagen darüber, welcher Art die Kontamination ist. Ferner ist auch eine quantitative Bestimmung des Gehaltes der Kontamination möglich.

Dieser Stand der Technik weist jedoch, insbesondere für den Einsatz in der Praxis, den Nachteil einer zu geringen Meßgenauigkeit auf, was zur Folge hat, daß eine quantitative Bestimmung der Kontamination in kurzer Zeit nicht möglich ist. Einflüsse, die die Meßgenauigkeit negativ beeinflussen, sind der Einfluß von Streuungs- und Trübungseffekten, Ungenauigkeiten insbesondere bei gewünschten kurzen Meßdauern im Sekundenbereich sowie Probleme, die sich durch überlappende oder auseinanderliegende Fluoreszenzbereiche ergeben. So eignet sich das Verfahren insbesondere nicht, um Messungen durchzuführen, die von äußeren Lichteinflüssen begleitet sind, wie z.B.

Messungen in offenen Oberflächengewässern, oder Messungen von Böden im Freien, die naturgemäß dem Umgebungslicht ausgesetzt sind. Auch ist eine ständige Überwachung von Flüssigkeiten nur eingeschränkt möglich, da eine Messung über zwei Minuten benötigt, wenn sie eine hinreichende Genauigkeit liefern soll.

Der vorliegenden Erfindung liegt daher die Aufgabe zugrunde, eine Möglichkeit bereitzustellen, um eine ausreichend hohe Meßgenauigkeit zu gewährleisten und in der Praxis auch unabhängig von verschiedenen Störeinflüssen sowie bei der Messungen innerhalb praxisgerechter Zeiträume arbeiten zu können.

Diese Aufgabe wird nach einem ersten Aspekt der vorliegenden Erfindung durch ein Verfahren der eingangs genannten Art gelöst, das zusätzlich die Schritte Detektieren von nicht von der Fluoreszenz herrührender Strahlung in einem dritten Erfassungsabschnitt, der um einen Abstand x von dem zweiten Erfassungsabschnitt getrennt ist, als Meßwert $F_3$ und Bestimmen des Grades der Kontamination durch Bildung des Verhältnisses der Meßwerte $F_1$ und $F_2$ unter Berücksichtigung des dritten Meßwertes $F_3$ umfaßt.

Zur Durchführung des Verfahrens wird erfindungsgemäß eine Vorrichtung der eingangs genannten Art vorgeschlagen, bei der die Detektoreinheit in einem dritten Erfassungsabschnitt, einem Umgebungseinflußabschnitt, der um einen Abstand x von dem zweiten Erfassungsabschnitt getrennt ist, nicht von der Fluoreszenz herrührende Strahlung als weiteren Meßwert erfaßt und die Rechnereinheit zur quantitativen Bestimmung des Kontaminationsgrades der Probe durch Bildung des Verhältnisses aus den in den beiden Erfassungsabschnitten Nutzsignalabschnitt und Untergrundsignalabschnitt erfaßten Meßsignalen unter Berücksichtigung des Meßsignals des Umgebungseinflußabschnitts ausgebildet ist.

Mit diesem Verfahren bzw. dieser Vorrichtung kann die nachzuweisende Substanzkonzentration durch eine differentielle Meßgröße gemäß der folgenden Formel quantitativ sehr genau bestimmt werden, wobei die Hintergrundstrahlung U auf die entsprechende Länge der ersten beiden Erfassungsintervalle entsprechend $U_1 = U \cdot (T_1/T_3$ bzw. $U_2 = U \cdot T_2 / T_3$ umgerechnet wird:

$$(1) \qquad c = \frac{F_{2b} - F_{1b} \cdot \frac{F_2 - U_2}{F_1 - U_1}}{F_{1a} \cdot \frac{F_2 - U_2}{F_1 - U_1} + F_{2a}}$$

| $F_1$: | Fluoreszenzintensität im ersten Erfassungsabschnitt $T_1$ |
|---|---|
| $F_2$: | Fluoreszenzintensität im zweiten Erfassungsabschnitt $T_2$ |
| $U_1, U_2$: | Intensität der Hintergrundstrahlung, umgerechnet auf die jeweilige Intervallänge $F_1$ bzw. $F_2$ |
| c: | Konzentration der nachzuweisenden Substanz |
| $F_{1a}, F_{1b} F_{2a}, F_{2b}$: | Kalibrierungsparameter, die für die jeweilig nachzuweisende Substanz bestimmt werden müssen. |

Auf diese Weise werden Systemschwankungen wie zum Beispiel in der Laserintensität eliminiert. Auch Streuungs- und Trübungseffekte durch Schwebeteilchen in den Meßlösungen haben unter normalen Bedingungen keinen Einfluß auf die Meßgenauigkeit mehr. Gleiches gilt für Umgebungslicht wie z.B. Sonneneinstrahlung bei der Messung im Freien.

Vorteilhafterweise wird der dritte Erfassungsabschnitt in einem Abstand x von mindestens 1 μs vom zweiten Erfassungsabschnitt entfernt gewählt, damit nur das Hintergrundsignal, jedoch keinerlei Fluoreszenzphotonen der nachzuweisenden Substanz registriert werden.

Nach einem zweiten Aspekt der vorliegenden Erfindung ist ein Verfahren der eingangs genannten Art vorgesehen, das dadurch gekennzeichnet ist, daß die Probe mit einer Frequenz größer als 1 kHz bestrahlt wird. Betreffend die Vorrichtung der eingangs genannten Art weist die Laserlichtquelle dabei erfindungsgemäß für die Aussendung der Laserpulse eine Frequenz von mehr als 1 kHz auf. Besonders vorteilhaft ist es, wenn die Frequenz im Bereich von 3 bis 8 kHz liegt.

Eine solche starke Erhöhung der Frequenz hat den Vorteil, daß in einer vorgegebenen kurzen Zeiteinheit bereits eine ausreichende Anzahl an Meßpunkten ermittelt werden kann, um eine quantitative Konzentrationsbestimmung mit hinreichender Genauigkeit zu liefern. So liegt bei einer Messung mit einer Frequenz von 3 kHz der statistische Fehler bereits nach 2 Sekunden unter 5 %. Damit ist es möglich, auch bei der für viele Anwendungen erforderlichen sehr kurzen Meßdauer eine hinreichende Genauigkeit zu erreichen. Somit kann die Erfindung beispielsweise bei der Überwachung von Fluidströmen eingesetzt werden, um kurzfristig Änderungen zu bemerken und somit eine schnelle Reaktion auf etwaige Veränderungen zu ermöglichen.

Es ist auch möglich, in einem Flüssigkeitsgemisch mit definierter Fluoreszenz das Auftreten eines weiteren Stoffes zu beobachten. So kann beispielsweise mit dem erfindungsgemäßen Verfahren ein Wasser-Kühlmittelgemisch überwacht werden. Tritt durch eine undichte Stelle irgendwo im System Öl aus und gelangt in das Wasser-Kühlmittelgemisch, so kann dies unmittelbar detektiert und eine entsprechende Maßnahme zur Behebung eingeleitet werden.

Besonders gute Ergebnisse erhält man, wenn die Energie des Lasers mindestens 20-50 nJ/Puls beträgt. Die Dauer eines Pulses beträgt vorteilhafterweise 1 ns. In diesem Bereich wird eine ausreichende Anregung der Substanz gewährleistet, um eine entsprechend starke Fluoreszenzsignale zu erhalten, die eine zuverlässige Auswertung ermöglichen. Als Anregungswellenlänge ist 355 nm besonders geeignet.

Vorteilhafterweise weist die erfindungsgemäße Vorrichtung elektronische Mittel zur beliebigen Einstellung der Erfassungsabschnitte hinsichtlich Beginn und Länge auf. Entsprechend ist bei dem erfindungsgemäßen Verfahren der Beginn sowie die Länge jedes Zeit-oder Erfassungsabschnitts $T_x$ frei wählbar.

Bei der herkömmlichen Vorrichtung bzw. bei dem herkömmlichen Verfahren ergeben sich aufgrund der starren Anordnung der Erfassungsabschnitte oftmals Schwierigkeiten und insbesondere Meßungenauigkeiten dadurch, daß Photonen, die von Untergrundsignalen wie z.B. der Fluoreszenz von Kühlmitteln, Reinigungsmitteln, Humin- und/oder Gelbstoffen herrühren, in den zweiten Erfassungsabschnitt, der das Nutzsignal liefert, fallen. Dadurch ergibt sich eine starke Verfälschung der Meßergebnisse. Ferner ist es erforderlich, daß sich der zweite Meßabschnitt unmittelbar an den ersten anschließt. Durch das Zurverfügungstellen elektronischer Mittel zur beliebigen Einstellung der Abschnitte ist es nunmehr möglich, die Zeitintervalle einander überlappen zu lassen oder sie voneinander um einen Abstand zu trennen, so daß man flexibel auf das unterschiedliche zeitliche Abklingverhalten in der Fluoreszenzintensität verschiedener Kohlenwasserstoffe bzw. ihrer Gemische reagieren und insbesondere das Zeitfenster für das Nutzsignal entsprechend näher an den Zeitpunkt der Laserpulses heran oder von diesem weg legen kann.

In einer weiteren vorteilhaften Ausgestaltung der Erfindung werden unterschiedlichen Anregungswellenlängen verwendet. Durch die unterschiedlichen Anregungswellenlängen werden unterschiedliche Substanzen bzw. Substanzklassen angeregt, so daß man unterschiedliche Fluoreszenzsignale erhält. Indem man die Ergebnisse, die aus den Signalen der Messungen bei unterschiedlicher Anregungswellenlänge erhalten werden, zueinander ins Verhältnis setzt, ergibt sich die Möglichkeit, bei unbekannter Kontamination diese grob zu klassifizieren. Im Falle eines mit Mineralölprodukten kontaminierten Bodens läßt sich so beispielsweise ermitteln, ob es sich bei dem Stoff um einen zur Klasse der Kraftstoffe oder der Schmieröle gehörigen Stoff handelt.

Besonders vorteilhaft ist es weiterhin, wenn die Rechnereinheit als Microcontroller ausgebildet ist. Dadurch ist es möglich, bei entsprechender Dimensionierung und Anordnung der übrigen Komponenten der Vorrichtung ein kompaktes Gerät zur Verfügung zu stellen, das insbesondere für den mobilen Einsatz geeignet ist. So sind beispielsweise vor Ort Bodenproben eines kontaminierten Bodens hinsichtlich ihres Schadstoffgehaltes bestimmbar.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt

Fig. 1 eine schematische Darstellung für eine Meßanordnung entsprechend der vorliegenden Erfindung;

Fig. 2 eine Prinzipdarstellung eines schematischen Fluoreszenzabklingspektrums, in dem die drei verschiedenen Meßabschnitte dargestellt sind;

Fig. 3 ein Diagramm, in dem die experimentell ermittelte Konzentrationskurve einer Öl-Wasser-Mischung (15 mg/l) in Abhängigkeit von der Zeit bei Zugabe von Sediment dargestellt ist;

Fig. 4 ein Diagramm, in dem die experimentell ermittelten Konzentrationskurven einer Öl-Wasser-Mischung (15 mg/l) bzw. Wasser ohne Zusatz in Abhängigkeit von der Zeit bei Zugabe von 3 mg/l schwarzer Tinte dargestellt ist.

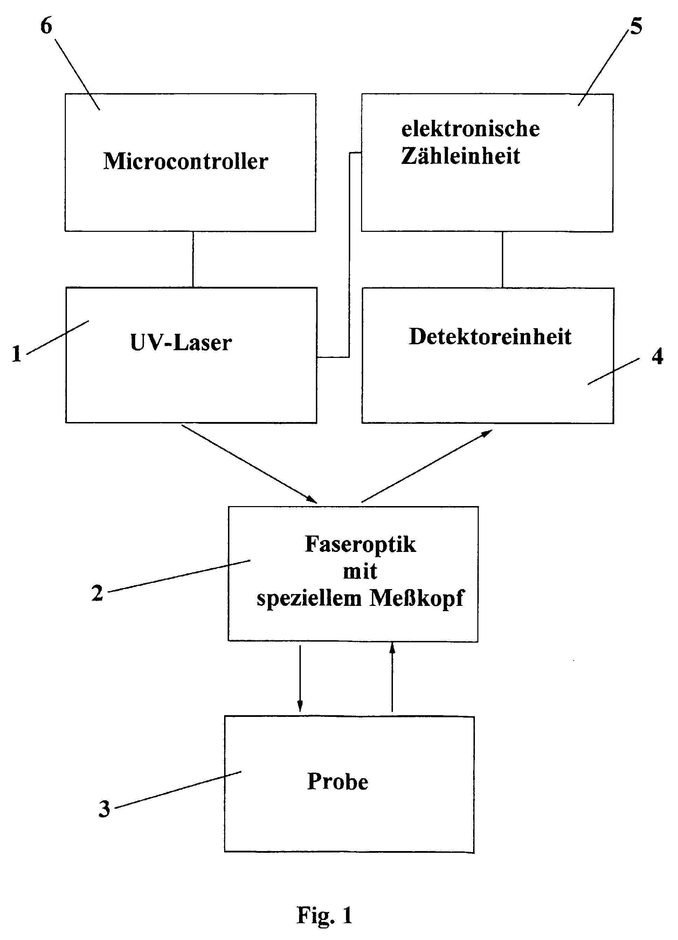

Gemäß Fig. 1 umfaßt eine Meßanordnung gemäß der vorliegenden Erfindung eine Laserlichtquelle 1 zur Erzeugung gepulster Laserstrahlung, eine Beleuchtungs- und Beobachtungsoptik 2 zum Aufbringen des Laserlichts auf eine Probe 3 bzw. Aufnehmen der von der Probe abgegebenen Strahlung. Eine mit der Optik 2 verbundene Detektoreinheit 4 erfaßt die von der Probe 3 abgestrahlte Strahlung, und zwar in der Form, daß in einem ersten Erfassungsabschnitt $T_1$ das Untergrundmeßsignal, d.h. das Signal, das auf die Fluoreszenz der Stoffe zurückzuführen ist, die nicht bestimmt werden sollen, in einem zweiten Erfassungsabschnitt $T_2$ das Nutzsignal, d.h. das Fluoreszenzsignal der zu bestimmenden Substanz, und in einem dritten Erfassungsabschnitt $T_3$ das durch andere Strahlung als Fluoreszenz erzeugte Signal $F_3$ erfaßt wird. Eine elektronische Zählereinheit 5 nimmt zum einen die Signale der Detektoreinheit 4, zum anderen Zählimpulse für jeden Lichtpuls des Lasers 1 auf und leitet diese an den Mikrocontroller 6 weiter, der mit Hilfe der Gleichung (1) aus den drei ermittelten Signalen $F_1$, $F_2$ und $F_3$ die Konzentration der zu ermittelnden Substanz bestimmt.

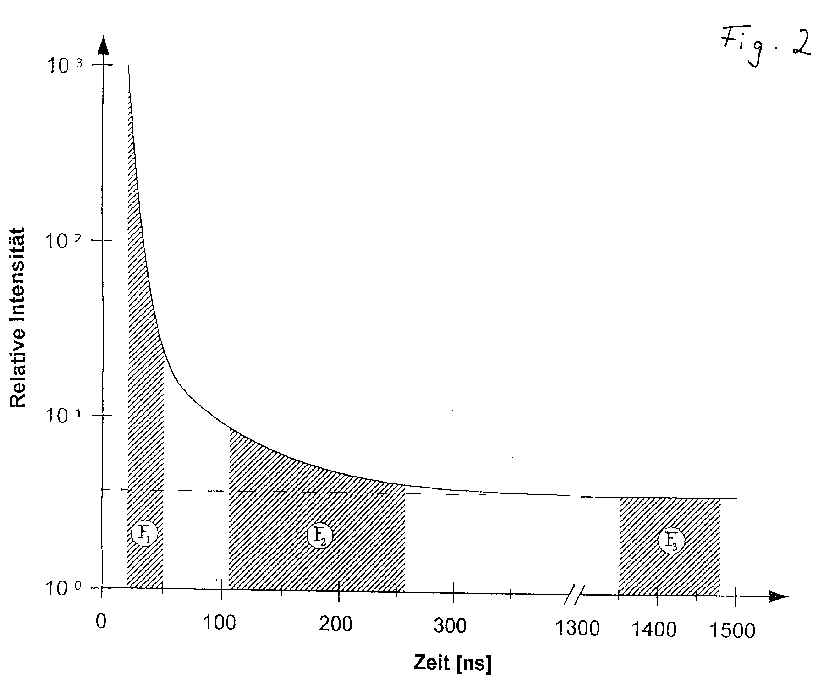

Fig. 2 zeigt schematisch ein Fluoreszenzabklingspektrum, in dem die drei unterschiedlichen Erfassungsabschnitte gekennzeichnet sind. Diese weisen unterschiedliche Zeitdauern auf. Der Abstand des dritten Erfassungsabschnitts vom zweiten Abschnitt beträgt mehr als 1 ps. So wird sichergestellt, daß das Signal keine Fluoreszenzstrahlung mehr enthält.

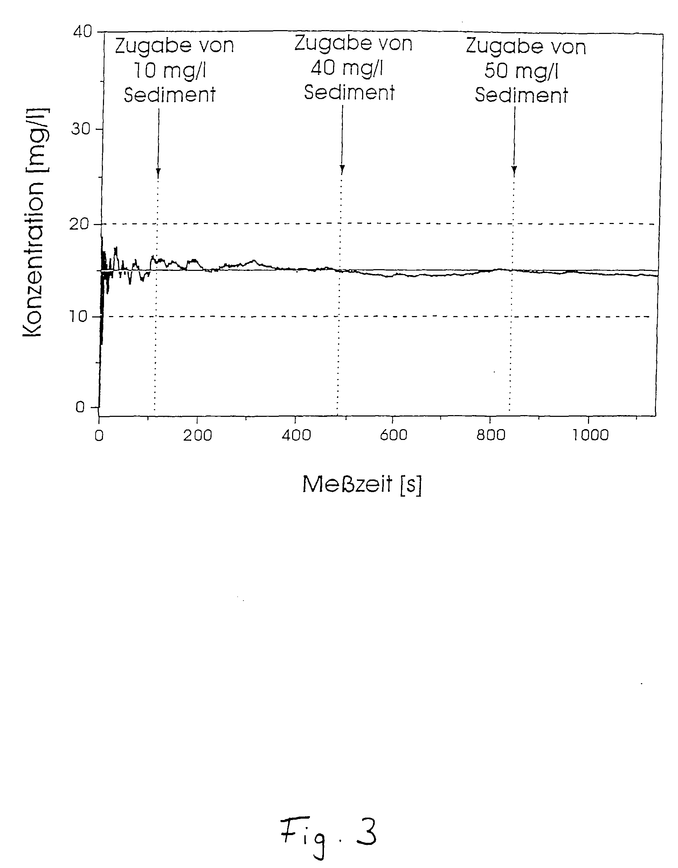

In dem der Fig. 3 zugrunde liegenden Versuch wurde eine Mischung Öl-Wasser (15mg/l) in Abhängigkeit von der Zeit gemessen. Dabei wurde nach 120s, 480s und 840s jeweils Sediment in den angegebenen Konzentrationen zugegeben. Die Berechnung der Konzentration erfolgte erfindungsgemäß, indem zusätzlich zu dem Nutzsignal $F_2$ und

dem Untergrundsignal $F_1$ ein drittes Signal $F_3$ in einem dritten Zeitintervall, das die nicht von der Fluoreszenz der zu bestimmenden Substanz bzw. der sonstigen fluoreszierenden Substanzen herrührende Strahlung wiedergibt, aufgenommen wurde und die entsprechenden Daten in die Gleichung (1) eingesetzt wurden. Die sehr geringen Abweichungen von der Ideallinie 15mg/l zeigen, daß durch diese Art der Bestimmung ein Einfluß von Streueffekten, die von dem Sediment bzw. allgemein von Schwebstoffen, die in Flüssigkeiten vorhanden sein können, verursacht werden, ausgeschlossen werden kann.

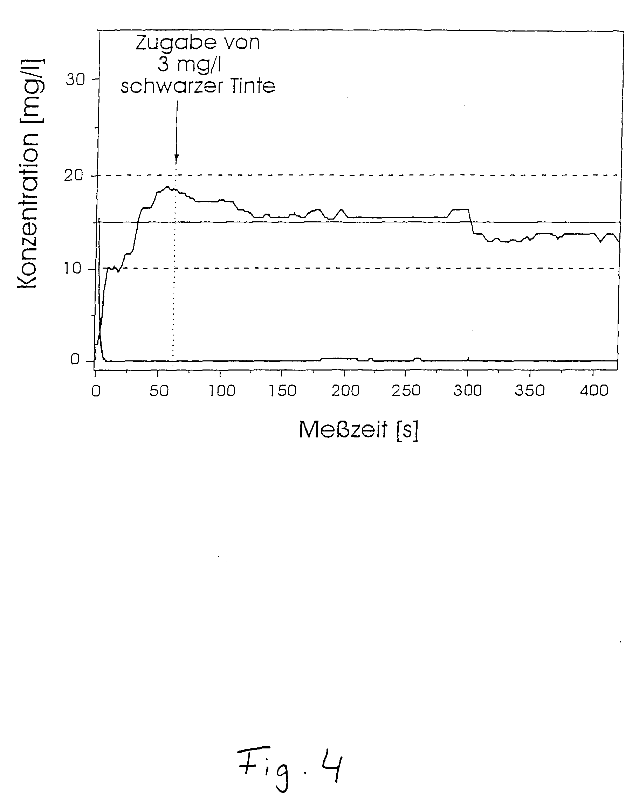

Ein entsprechender Nachweis für die Unabhängigkeit von Trübungseinflüssen ist in der Fig. 4 erbracht. In dem dieser Figur zugrunde liegenden Versuch wurde ebenfalls eine Öl-Wasser-Mischung (15mg/l) und außerdem Wasser ohne Zusatz, jeweils in Abhängigkeit von der Zeit, vermessen. Wiederum erfolgte die Berechnung der Konzentration erfindungsgemäß mit zusätzlichem dritten Erfassungsabschnitt für die nicht-Fluoreszenzstrahlung unter Verwendung der Gleichung (1). Auch bei Zusatz von 3 mg/l schwarzer Tinte nach 60 s konnte keine relevante Schwankung in der Konzentrationsbestimmung festgestellt werden.

Das erfindungsgemäße Verfahren bzw. die erfindungsgemäße Vorrichtung sind in Bezug auf die Bestimmung von Kontaminationen beschrieben. Unter diesem Begriff ist nicht notwendigerweise nur eine Verunreinigung zu verstehen, vielmehr lassen sich mit dem erfindungsgemäßen Verfahren und der Vorrichtung auch die Gehalte an Nutzstoffen, also bestimmten erwünschten Substanzen bestimmen. Es muß sich also nicht notwendigerweise um einen unerwünschten Stoff handeln. Vielmehr ist eine Anwendung beispielsweise auch bei der Untersuchung von Substanzen bezüglich ihrer Zusammensetzung aus unterschiedlichen Komponenten denkbar.

**Patentansprüche**

1.  Verfahren zur Bestimmung von Kontaminationen, umfassend die Schritte

    -  Bestrahlen einer Probe mit gepulster Laserstrahlung aus wenigstens einer Laserlichtquelle (1) sowie
    -  Detektieren von von der Probe (3) abgestrahlter Fluoreszenzstrahlung in einem ersten Erfassungsabschnitt als Meßwert $F_1$ und in einem zweiten Erfassungsabschnitt als Meßwert $F_2$,

    **dadurch gekennzeichnet**, daß das Verfahren des weiteren die Schritte

    -  Detektieren von nicht von der Fluoreszenz herrührender Strahlung in einem dritten Erfassungsabschnitt, der um einen Abstand x von dem zweiten Erfassungsabschnitt getrennt ist, als Meßwert $F_3$ und
    -  Bestimmen des Grades der Kontamination durch Bildung des Verhältnisses der Meßwerte $F_1$ und $F_2$ unter Berücksichtigung des dritten Meßwertes $F_3$

    umfaßt.

2.  Verfahren nach Anspruch 1, dadurch gekennzeichnet, daß die Probe (3) mit einer Frequenz größer als 1 kHz bestrahlt wird.

3.  Verfahren zur Bestimmung von Kontaminationen, umfassend die Schritte

    -  Bestrahlen einer Probe (3) mit gepulster Laserstrahlung aus wenigstens einer Laserlichtquelle (1),
    -  Detektieren von von der Probe (3) abgestrahlter Fluoreszenzstrahlung in einem ersten Erfassungsabschnitt $T_1$ als Meßwert $F_1$ und in einem zweiten Erfassungsabschnitt $T_2$ als Meßwert $F_2$ sowie
    -  Bestimmen des Grades der Kontamination durch Bildung des Verhältnisses der Meßwerte $F_1$ und $F_2$,

    **dadurch gekennzeichnet**, daß die Probe mit einer Frequenz größer als 1 kHz bestrahlt wird.

4.  Verfahren nach Anspruch 3, dadurch gekennzeichnet, daß das Verfahren des weiteren den Schritt

    -  Detektieren der nicht von der Fluoreszenz herrührenden Strahlung in einem dritten Erfassungsabschnitt, der um einen Abstand x von dem zweiten Erfassungsabschnitt getrennt ist, als Meßwert $F_3$ umfaßt und

    das Bestimmen des Grades der Kontamination durch Bildung des Verhältnisses der Meßwerte $F_1$ und $F_2$ unter Berücksichtigung des dritten Meßwertes $F_3$ erfolgt.

5.  Verfahren nach einem der Ansprüche 1 bis 4, dadurch gekennzeichnet, daß der Beginn sowie die Länge jedes

Erfassungsabschnitts $T_x$ frei wählbar ist.

6. Vorrichtung zur Bestimmung von Kontaminationen, umfassend

- wenigstens eine Laserlichtquelle (1) zur Erzeugung von gepulster Laserstrahlung,
- eine Beleuchtungs- und Beobachtungsoptik (2) zur Aufbringung des Laserlichtes auf eine und zur Aufnahme der abgestrahlten Strahlung von einer Probe (3), sowie
- eine Detektoreinheit (4) zur Erfassung von von der Probe (3) abgestrahlter und über die Beobachtungsoptik (2) weitergeleiteter Fluoreszenzstrahlung der Probe (3),

wobei die Detektoreinheit (4) die von der Probe (3) abgestrahlte Fluoreszenzstrahlung in zwei Erfassungsabschnitten ($T_1$, $T_2$), nämlich einem Untergrundsignalabschnitt ($T_1$) sowie einem Nutzsignalabschnitt ($T_2$), die einen unterschiedlichen zeitlichen Abstand T von einem Zeitpunkt der Aufbringung eines Laserblitzes auf die Probe (3) aufweisen, erfaßt, **dadurch gekennzeichnet**, daß die Detektoreinheit (4) in einem dritten Erfassungsabschnitt, dem Umgebungseinflußabschnitt $T_3$, der um einen Abstand x von dem zweiten Erfassungsabschnitt getrennt ist, nicht von der Fluoreszenz herrührende Strahlung als Meßwert $F_3$ erfaßt und eine Rechnereinheit zur quantitativen Bestimmung des Kontaminationsgrades der Probe durch Bildung des Verhältnisses aus den in den Erfassungsabschnitten Nutzsignalabschnitt $T_2$ und Untergrundsignalabschnitt $T_1$ erfaßten Meßsignalen $F_2$ bzw. $F_1$ unter Berücksichtigung des Meßsignals $F_3$ des Umgebungseinflußabschnitts $T_3$ vorgesehen ist.

7. Vorrichtung nach Anspruch 6, dadurch gekennzeichnet, daß die Laserlichtquelle (1) für die Aussendung der Laserpulse eine Frequenz von mehr als 1 kHz aufweist.

8. Vorrichtung zur Bestimmung von Kontaminationen, umfassend

- wenigstens eine Laserlichtquelle (1) zur Erzeugung von gepulster Laserstrahlung,
- eine Beleuchtungs- und Beobachtungsoptik (2)zur Aufbringung des Laserlichtes auf eine und zur Aufnahme der abgestrahlten Strahlung von einer Probe (3)
- eine Detektoreinheit (4) zur Erfassung der von der Probe (3) abgestrahlten und über die Beobachtungsoptik (2) weitergeleiteten Fluoreszenzstrahlung der Probe (3),

wobei die Detektoreinheit (4) von der Probe (3) abgestrahlte Fluoreszenzstrahlung in zwei Erfassungsabschnitten ($T_1$, $T_2$), nämlich einem Untergrundsignalabschnitt ($T_1$) sowie einem Nutzsignalabschnitt ($T_2$), die einen unterschiedlichen zeitlichen Abstand T von einem Zeitpunkt der Aufbringung eines Laserblitzes auf die Probe (3) aufweisen, erfaßt und eine Rechnereinheit zur quantitativen Bestimmung des Kontaminationsgrades der Probe aus den in den beiden Erfassungsabschnitten Untergrundsignalabschnitt und Nutzsignalabschnitt erfaßten Meßsignalen vorgesehen ist, **dadurch gekennzeichnet**, daß die Laserlichtquelle (1) für die Aussendung der Laserpulse eine Frequenz von mehr als 1 kHz aufweist.

9. Vorrichtung nach Anspruch 8, dadurch gekennzeichnet, daß die Detektoreinheit in einem dritten Erfassungsabschnitt, dem Umgebungseinflußabschnitt $T_3$, der um einen Abstand x von dem zweiten Erfassungsabschnitt getrennt ist, nicht von der Fluoreszenz herrührende Strahlung als Meßwert $F_3$ erfaßt, und die Rechnereinheit zur quantitativen Bestimmung des Kontaminationsgrades der Probe durch Bildung des Verhältnisses aus den in den beiden Erfassungsabschnitten Nutzsignalabschnitt $T_2$ und Untergrundsignalabschnitt $T_1$ erfaßten Meßsignalen $F_2$ bzw. $F_1$ unter Berücksichtigung des Meßsignals $F_3$ des Umgebungseinflußabschnitts $T_3$ ausgebildet ist.

10. Vorrichtung nach einem der Ansprüche 6 bis 9, dadurch gekennzeichnet, daß elektronische Mittel zur beliebigen Einstellung der Erfassungsabschnitte ($T_1$, $T_2$, $T_3$) hinsichtlich Beginn und Länge vorgesehen sind.

11. Verfahren zur Bestimmung von Kontaminationen mit einer Vorrichtung nach einem der Ansprüche 6 bis 7 oder 9 bis 10, wobei die Fluoreszenzstrahlung in zwei verschiedenen Erfassungsabschnitten als Meßwerte $F_1$ und $F_2$ erfaßt wird, **dadurch gekennzeichnet**, daß in einem weiteren Erfassungsabschnitt als Meßwert $F_3$ zusätzlich die nicht von der Fluoreszenz herrührende Strahlung erfaßt wird und in der Rechnereinheit (6) aus den ermittelten Meßwerten $F_1$, $F_2$, $F_3$ der Grad der Kontamination bestimmt wird.

**6**

**5**

Microcontroller

elektronische
Zähleinheit

**1**

UV-Laser

Detektoreinheit

**4**

**2**

Faseroptik
mit
speziellem Meßkopf

**3**

Probe

Fig. 1

Fig. 2

EP 1 089 068 A1

Fig. 3

Fig. 4

Europäisches
Patentamt

**EUROPÄISCHER RECHERCHENBERICHT**

Nummer der Anmeldung

EP 99 25 0344

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 252 578 A (SHULZE JOHN E) 13. Januar 1988 (1988-01-13) * Seite 5, Zeile 51 - Zeile 52 * * Seite 6, Zeile 19 - Seite 7, Zeile 48 * * Seite 8, Zeile 25 - Seite 9, Zeile 16; Abbildungen 3,5 * | 1-11 | G01N21/64 |
| D,A | DE 195 07 119 A (SCHADE W ET AL) 7. September 1995 (1995-09-07) | 1,6 | |
| X | * das ganze Dokument * | 3,8 | |
| A | AMMASI PERIASAMY ET AL: "TIME-RESOLVED FLUORESCENCE LIFETIME IMAGING MICROSCOPY USING A PICOSECOND PULSED TUNABLE DYE LASER SYSTEM" REVIEW OF SCIENTIFIC INSTRUMENTS,US,AMERICAN INSTITUTE OF PHYSICS. NEW YORK, Bd. 67, Nr. 10, 1996, Seite 3722-3731 XP000635833 ISSN: 0034-6748 * Seite 3725, rechte Spalte, Absatz 2 * | 2,3,7,8 | |
| | | | RECHERCHIERTE SACHGEBIETE (Int.Cl.7) |
| | | | G01N |
| A | US 5 776 782 A (TSUJI AKIHIKO) 7. Juli 1998 (1998-07-07) * Spalte 9, Zeile 24 - Spalte 10, Zeile 3; Abbildung 9 * | 6,8 | |
| A | EP 0 626 575 A (WALLAC OY) 30. November 1994 (1994-11-30) * Seite 3, Zeile 12 - Zeile 28; Abbildung 16 * | 1,6 | |

-/--

Der vorliegende Recherchenbericht wurde für alle Patentansprüche erstellt

| Recherchenort | Abschlußdatum der Recherche | Prüfer |
|---|---|---|
| DEN HAAG | 17. Dezember 1999 | Tabellion, M |

EPO FORM 1503 03.82 (P04C03)

# EP 1 089 068 A1

**Europäisches Patentamt**

# EUROPÄISCHER RECHERCHENBERICHT

Nummer der Anmeldung

EP 99 25 0344

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | SCHADE W AND BUBLITZ J: "NEUES LASERVERFAHREN FÜR DEN SPURENNACHWEIS VON SCHADSTOFFBELASTUNGEN IM WASSER UND IM BODEN"<br>LASER UND OPTOELEKTRONIK,DE,FACHVERLAG GMBH. STUTTGART,<br>Bd. 25, Nr. 4, 1993, Seite 41-48<br>XP000387823<br>ISSN: 0722-9003<br>----- | | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 17. Dezember 1999 | Tabellion, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                     EP 99 25 0344

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-1999

| Im Recherchenbericht angeführtes Patentdokument | Datum der Veröffentlichung | Mitglied(er) der Patentfamilie | Datum der Veröffentlichung |
|---|---|---|---|
| EP 0252578 A | 13-01-1988 | US 4895156 A<br>JP 63011135 A | 23-01-1990<br>18-01-1988 |
| DE 19507119 A | 07-09-1995 | KEINE | |
| US 5776782 A | 07-07-1998 | JP 7229835 A<br>US 5911952 A<br>EP 0668498 A | 29-08-1995<br>15-06-1999<br>23-08-1995 |
| EP 0626575 A | 30-11-1994 | FI 932436 A | 10-01-1995 |

EPO FORM P0461

Für nähere Einzelheiten zu diesem Anhang : siehe Amtsblatt des Europäischen Patentamts, Nr. 12/82